# EUROPEAN PATENT SPECIFICATION

(11) **EP 0 581 244 B1**
(45) Date of publication and mention of the grant of the patent: **18.03.1998**
(21) Application number: 93111988.7
(22) Date of filing: 27.07.1993
(51) Int. Cl.: C09J 7/02

(54) **Transfer film**
Transferfolie
Film de transfert

(30) Priority: 31.07.1992 JP 205465/92
(43) Date of publication of application: 02.02.1994
(73) Proprietor: MINNESOTA MINING AND MANUFACTURING COMPANY, St. Paul, Minnesota 55133-3427 (US)
(72) Inventor: Abe, Hidetoshi, c/o Minnesota Mining and, St. Paul, Minnesota 55133-3427 (US)
(74) Representative: VOSSIUS & PARTNER

(56) References cited:
- WO-A-89/11512
- US-A- 3 202 540
- DATABASE WPI Week 8837, Derwent Publications Ltd., London, GB; AN 88-260881 & JP-A-63 189 486 (SEKISUI CHEM. IND.) 5 August 1988

## Description

This invention relates to a prespace film which is excellent in shelf life, has a small drop of adhesion strength with aging, and has suitable adhesion to a decorative film having rough surface and low adhesion or a decorative film using silicon type peel paper.

Decorative films having an adhesive layer have gained a wide application in place of decoration by paints from the aspects of weatherability, visibility and economy. Such film must be located accurately and must also be processed quickly. Therefore, bonding of the decorative film has generally been made by the use of a prespace film in most cases.

Here, the term "prespace film" represents an adhesive film which makes it possible to transfer accurately and quickly a decorative film cut out into characters having predetermined sizes and shapes to a desired position, and it basically consists of an adhesive layer on a polyolefin film.

As prespace films, KOKAI (Japanese Unexamined Patent Publication) No. 61-103975 discloses a surface protective film prepared by laminating a tackifier containing 0 to 80 parts by weight of a tackifying resin on a substrate of a polyolefinic film on the basis of 100 parts by weight of a styrene-ethylene-butylene-styrene-block copolymer (hereinafter referred to as "SEBS"). However, this film involves the problems that its shelf life is short and its initial adhesion strength decreases with time.

KOKAI (Japanese Unexamined Patent Publication) No. 63-189485 discloses a hot-melt adhesive composition comprising 5 to 25 parts by weight of SEBS, 40 to 70 parts by weight of at least one of adhesive resins selected from hydrogenated aromatic petroleum resin, hydrogenated aliphatic petroleum resins and hydrogenated terpene resins, and a plasticizing resin, whereby the paraffin component and naphthenic component in the plasticizing oil are from 10 to 40 parts by weight on the basis of the adhesive composition. However, this film, too, involves the problem that its adhesion strength decreases in the aging test.

As described above, the conventional adhesives involve the problem of the drop of the adhesion strength in the aging test. Although the conventional prespace film exhibits relatively good adhesion to a flat surface, it has the problem that its adhesion is low for films having a rough surface, and cannot be used as the prespace film.

Furthermore, the conventional prespace film has low adhesion to silicon type substrates and when the silicon type substrate is used as peel paper of the decorative film, the prespace film having the decorative film transferred thereto cannot be moved easily to a desired position. Accordingly, there remains the problem that an expensive Teflon type backing must be used.

The present invention provides a prespace film which solves all these problems, is excellent in shelf life and adhesion strength with time, and exhibits high adhesion even to decorative films having a rough surface and using silicon peel paper.

In a prespace film of polyolefin having an adhesive layer, the present invention solves the problems described above by the prespace film having an adhesive layer of 50 to 150 parts by weight of a tackifier, 20 to 150 parts by weight of process oil and 0.01 to 5 parts by weight of a silicon adhesive or a silicon coupler, on the basis of 100 parts by weight of a styrene-ethylene-butylene-styrene (SEBS) block copolymer in the adhesive layer.

SEBS is preferred as the thermoplastic elastomer as the base of the prespace film according to the present invention.

Ordinary acrylic adhesives essentially need a cross-linking agent to improve cohesion strength and variance in their performance is great. Styrene-butadiene-styrene block polymers (SBS) and styrene-isoprene-styrene block polymer (SIS) have problems in their heat resistance, oxidation resistance, weatherability, and so forth.

In contrast, SEBS forms a physical cross-linkage domain at its styrene portion and has high cohesive strength. In view of its heat resistance, oxidation resistance, bonding strength, adhesion strength, etc., it is most suitable for the present invention.

This SEBS is readily available on the market, and preferred examples include Kraton GX1657, G1650 and G1652 (products of Shell Chemical Co.), Toughtec H1041, H1051 and H1052 (products of Asahi Kasei K.K.).

Modified products of SEBS, e.g. SEBS containing a carboxyl group and a silanol group such as Kraton M1913, M1953 (products of Asahi Kasei K.K.), etc., can be used as the SEBS of the present invention.

The tackifier used in the present invention preferably has high compatibility with the SEBS, is colorless and transparent, and has excellent stability with time. Particularly preferred are hydrogenated type tackifiers because they are excellent in compatibility and stability with time.

Definite examples are hydrogenated cyclopentadiene type petroleum resins (hereinafter referred to as the "hydrogenated DCPD"), hydrogenated terpene, hydrogenated aromatic petroleum resins, hydrogenated α-methyl-styrene, and so forth.

Among them, the hydrogenated DCPD is particularly excellent in compatibility with the SEBS, and Tonex ECR231C (a product of Tonen Kagaku K.K.), Escoretz E5380, E5300 (products of Exone Chemical Co.), Easttack H100W, H13OW (products of Eastman Co.), etc., can be used in the present invention.

A suitable amount of addition of the tackifier is from 50 to 150 parts by weight on the basis of 100 parts weight of the SEBS.

As shown in Table 2, if the amount of addition of the tackifier is less than 50 parts by weight, adhesion strength is low, and drops remarkably in the aging test.

If the amount of addition of the tackifier is greater than 150 parts by weight, on the other hand, shelf life becomes low and the cohesive strength drops.

The term "process oil" generally consists of a paraffin, a naphthene and an aromatic, and is used as a plasticizer, a tackifier and an adhesion promoter. The process oil in the present invention is not particularly limited, but preferred are those having excellent stability with time and high compatibility with the SEBS and the tackifier. Definite examples are naphthenic oil, paraffinic oil, aromatic oil and their mixtures. Among them, preferred particularly is the naphthenic oil because its aromatic component is less than 1% by ring analysis, it has high aging stability in bonding strength and it has high compatibility.

More definitely, Shellflex 371N, 451, 22, 26 (products of Shell Chemical Co.) can be used.

The amount of addition of the process oil in the present invention is suitably from 20 to 150 parts by weight on the basis of 100 parts by weight of the SEBS, and particularly preferred is from 30 to 70 parts by weight. If the amount is less than 20 parts by weight, preservation stability and aging stability of the adhesion strength become inferior and if it exceeds 150 parts by weight, on the other hand, the cohesive strength of the tackifier drops and the problem of residual adhesive of the tackifier occurs.

The silicon tackifier or the silane coupler added in the present invention has three effects. One provides suitable adhesion power as peel paper of the decorative film even when the silicon type substrate is used. In other words, the prespace tape having the decorative tape transferred thereto can be moved easily to a desired position and can be positioned correctly. Accordingly, when an environment of the work is not good, for example, at the roof of a building where the winding is strong, the decorative film can be bonded safely.

The second effect is that stability of the composition consisting of the SEBS/tackifier/process oil can be improved remarkably. In other words, in conventional composition systems not containing the silicon tackifier, stability of the composition is low, and there have been the problems that the tackifier moves to the surface during storage, the initial adhesion strength remarkably drops and the transfer of the decorative film cannot be made. These phenomena are confirmed by a Fourier transform infrared spectrophotometer.

The third effect is for preventing the drop of the adhesion strength of the tackifier. It is believed that the silicon tackifier or the silane coupler primarily causes a dehydration reaction on the surface of the tackifier and forms a strong silanol bond with the tackifier on the surface of the bonded article. Accordingly, excellent adhesion strength can be maintained even after the aging test, and the effect is particularly great in the moisture-proofing test.

The amount of addition of the silicon tackifier or the silane coupler in the present invention is suitably from 0.01 to 5 parts by weight on the basis of 100 parts by weight of the SEBS and particularly preferably, from 0.1 to 1 part by weight. Further preferred is the conjoint use of the silicon tackifier and the silane coupler, and the ratio of the silicon tackifier to the silane coupler is from about 5:1 to about 20:1.

If the amount is less than 0.01 parts by weight, the effect of the silicon tackifier or the silane coupler is insufficient and if it exceeds 5 parts by weight, on the contrary, compatibility with the SEBS drops, so that precipitates are likely to occur.

It is believed generally that the SEBS or the tackifier and the silicon adhesive have low compatibility with each other and cannot be used so easily in combination with each other. In the present invention, however, the problem of compatibility is solved by strictly limiting the amount of addition and by conjoint use with the silane coupler.

The silicon tackifier is not limited in particular, and KR1-101-10, KR105, KR120 (products of Shinetsu Silicone K.K.) can be used, for example.

Commercially available coupling agents can be used as the silane coupler, and they may be either bifunctional or trifunctional.

Definite examples are 3-aminopropyltrimethoxysilane, 3-aminopropyltriethoxysilane, 3-glycidoxypropyltri-methoxysilane, 3-mercaptopropyltrimethoxysilane, n-phenyl-3-aminopropyltrimethoxysilane, 3-chloropropyldimethoxy-methylsilane, 3-aminopropyldimethoxymethylsilane, vinyltriethoxysilane, and so forth.

Particularly, 3-aminopropyltrimethoxysilane and 3-aminopropyltriethoxysilane are preferred in the present invention because they are trifunctional, have a high reaction rate and have the amino group which has excellent compatibility with the SEBS.

In the present invention, the thickness of the adhesive layer is preferably from 20 to 70 µm as shown in Table 3, and particularly preferred is 30 to 50µm.

If the thickness of the adhesive layer is less than 20 µm, bonding strength and adhesion strength become low and if it exceeds 70 µm, on the contrary, the production becomes more difficult and the production cost becomes high.

Incidentally, the thickness of the adhesive layer is suitably from 30 to 50 µm when the surface of the decorative film is rough, e.g. when it has emboss of a mean coarseness of at least 5 µm or when the mat treatment is applied.

The synthetic organic polymeric film substrate used for the present invention preferably is preferably of a polyolefinic type from the aspects of elongation, flexibility, transparency, weatherability, heat resistance, production cost, etc., and definite examples are polypropylene, polyethylene, polyethylene-polypropylene copolymers, polymethyl pentene, and so forth.

The thickness of the substrate is not particularly limited, either, and preferably is from 25 to 100 µm from the aspects of easiness of the work and the production cost.

Furthermore, an antioxidant, a U.V. absorber, a viscosity adjuster, a filler, an extender, etc., may be added to the tackifier within the range that does not deteriorate the effects of the present invention.

Hereinafter, examples of the present invention will be given, but the present invention is not particularly limited thereto. The characteristics in each Example were measured by the following measuring methods.

### 1. Initial adhesion strength

A testpiece was pressed to an aluminum plate having a soft vinyl chloride laminated thereon, and after it was preserved at 20°C and 65% R.H. for 1 hour, a 180°C peel test was carried out. The peel rate was 300 mm/min. For practical application, the initial adhesion strength of at least 500g/2.54 cm (500 g/in.) is necessary.

### 2. Adhesion with aging

After the testpiece was aged at 65°C for one week, the adhesion strength was measured in the same way as in item (1).

### 3. Adhesion strength retention ratio

Symbol ⓞ represents the case where the ratio of the value (2) to the value (1) was more than 100%, symbol o represents the case where the ratio was more than 50% and symbol x represents the other case.

### 4. Adhesion to film

The prespace film was bonded and pressed to a cut-off letter produced in the manner described already. Symbol o represents the case where the cut-off letter was completely bonded to the prespace film and could be transferred to an acrylic substrate without any problem, symbol Δ represents the case where the transfer was partially incomplete and symbol x represents the other cases. Evaluation was also made for (a) a vinyl chloride film (having a surface coarseness of below 1 µm on an average), (b) an acrylic film and (c) silicon treated film, using the cut-off letters. Furthermore, in Table 2, a vinyl chloride film having a means surface coarseness of 5 µm was used.

### 5. Adhesion to film after aging

After the testpiece was aged at 65°C and 95% R.H. for one week, the same test as (4) was carried out.

### 6. Adhesion residue after bonding

After the cut-off letters were bonded to an aluminum plate, the prespace film was laminated. After aging at 80°C for 24 hours, the film was peeled manually. Symbol o represents the case where no adhesion residue was observed on the substrate and the film, and symbol x represents the other cases.

### Detailed Description of the Invention

An example of using a prespace film comprises using a "Scotchcal film" (a product of 3M Co.) as a decorative film will be given.

The Scotchcal™ film is first cut into a predetermined size and shape using a character cutting machine "Scotchmaster" (a product of 3M Co.). Unnecessary portions of the Scotchcal™ tape are removed. A prespace tape is bonded to the Scotchcal™ tape by the use of compression. After the Scotchcal™ film is transferred to the prespace tape, the prespace tape is peeled. The prespace film having the Scotchcal™ film transferred thereto is moved and located to a desired position, and is then bonded. Only the prespace film is peeled, and transfer is completed.

### Example 1:

A prespace film of the invention was produced by forming an adhesive layer (40 µm) having a composition consisting of 100 parts by weight of SEBS (Kraton G1657, a product of Shell Chemical Co.), 100 parts by weight of hydrogenated DCPD (Tonex ECR321C, softening point = 105°C, a product of Tonen Kagaku K.K.), 50 parts by weight of naphthenic process oil (Shellflex 371N, a product of Shell Chemical Co.), 1 part by weight of a silicon type tackifier (KR120, a product of Shinetsu Silicone K.K.) and 0.1 part by weight of silane coupler (A1100, a product a Nippon Unicar K.K.), on a 50 µm-thick polypropylene film. The characteristics of this adhesive are tabulated in Table 1.

Table 1 shows the characteristics of the adhesive of Examples 2 to 11 wherein the kinds and the amounts of addition of the tackifier, process oil, silicon adhesive and silane coupler were changed.

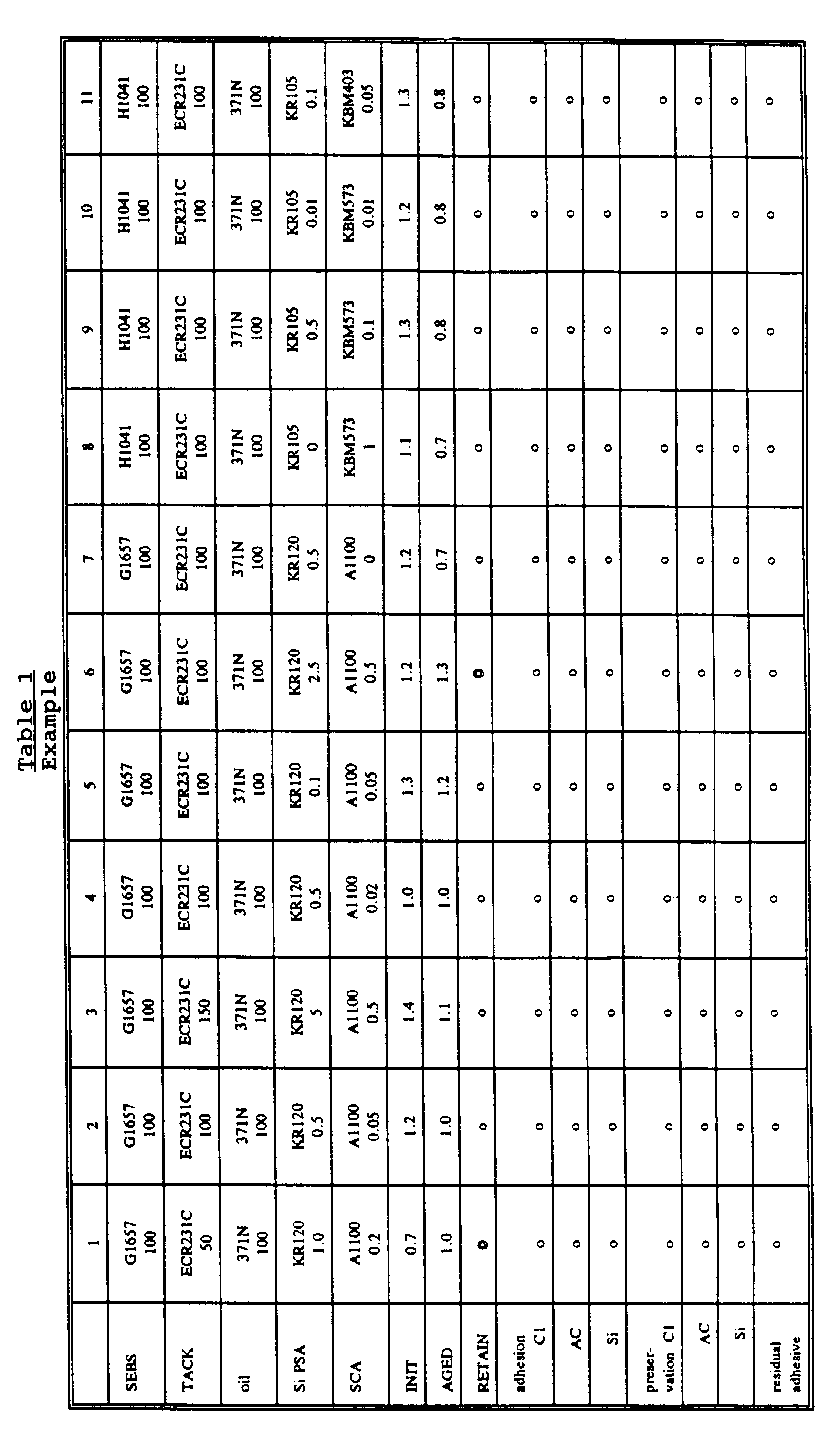

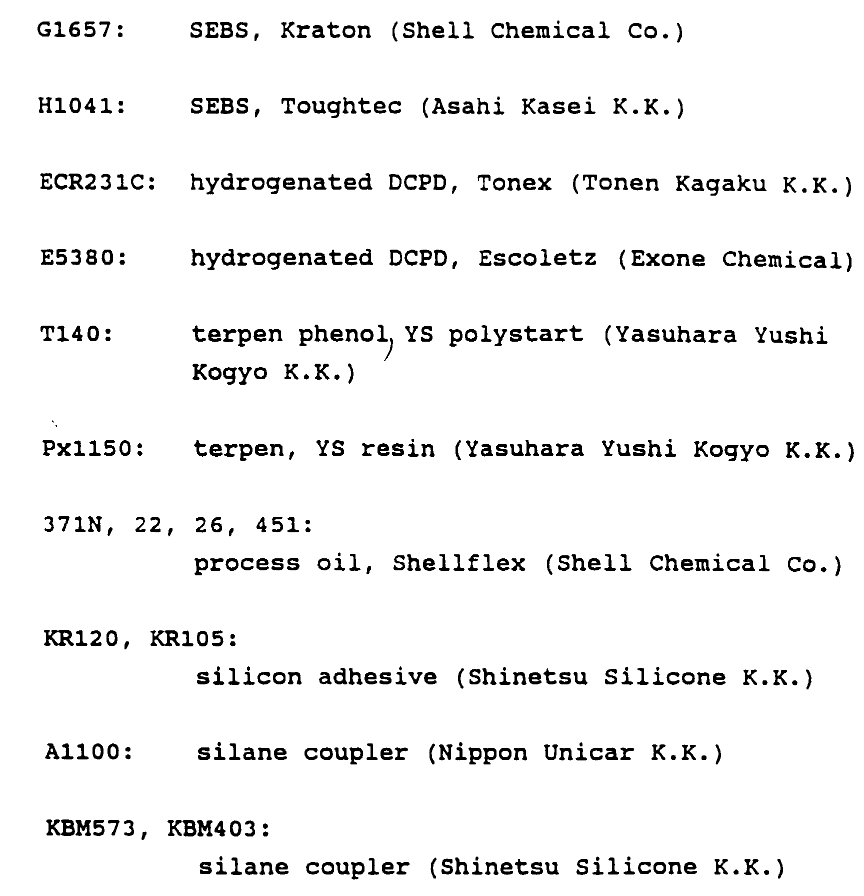

### Comparative Examples 1 to 7:

Comparative Examples 1 to 7 show the characteristics of the adhesives which are out of the range of the composition of the present invention.

**TABLE 2**

| Comparative Examples | | | | | | | |
|---|---|---|---|---|---|---|---|
| | 1 | 2 | 3 | 4 | 5 | 6 | 7 |
| SEBS | G1657 100 | 100 | 100 | 100 | 100 | 100 | 100 |
| TACK | ECR231C 180 | 20 | 50 | 100 | E5380 130 | 100 | 100 |
| oil | 371N 100 | 50 | 20 | 170 | 100 | 100 | 22 130 |
| Si PSA | KR120 0.005 | 0.005 | 10 | 0.1 | 0 | 0 | KR105 0 |
| SCA | KBM403 0 | 0.01 | 0 | 0.02 | 0 | 0 | 0.005 |
| INIT | 0.7 | 0.6 | 0.7 | 1.2 | 1.3 | 1.2 | 1.2 |
| AGED | 0.1 | 0.2 | 0.3 | 0.3 | 0 | 0 | 0 |
| RETAIN | x | x | x | x | x | x | x |
| adhesion Cl | o | o | x | o | o | o | o |
| AC | o | o | x | o | o | o | o |
| Si | x | x | o | o | x | x | x |
| preservation Cl | x | x | x | x | x | x | x |
| AC | x | x | x | x | x | x | x |
| Si | x | x | Δ | Δ | x | x | x |
| residual adhesive | o | o | o | x | o | o | x |

**Table 3**

| Influences of adhesive thickness, initial adhesion strength (kg/2.54 cm (kgf/inch), adhesion | | | | |
|---|---|---|---|---|
| adhesive thickness | rough surface (mean roughness 5µ) | flat surface (mean roughness ≦ 1µ) | rough surface | flat surface |
| 10 µm | 0.2 | 0.9 | x | o |
| 20 | 0.5 | 1.1 | o | o |
| 30 | 0.6 | 1.2 | o | o |
| 40 | 0.8 | 1.0 | o | o |
| 50 | 1.0 | 1.1 | o | o |
| 60 | 1.1 | 1.1 | o | o |
| 70 | 1.2 | 1.2 | o | o |
| 80 | 1.2 | 1.2 | o | o |
| 100 | 1.2 | 1.1 | o | o |

| | | |
|---|---|---|
| SEBS | G1657 | 100 PTS |
| TACK | ECR231C | 100 " |
| OIL | 371N | 50 |
| Si PSA | KR120 | 1.0 |
| SCA | A1100 | 0.1 |

As shown in Tables 1 and 3, the adhesive of the prespace film obtained by the present invention has excellent shelf life, has a small drop of the adhesion strength with aging, and has suitable adhesion to a decorative film having a rough surface or a decorative film using silicon peel paper.

## Claims

1. A prespace film comprising a film of polyolefin having an adhesive layer comprising:
50 to 150 parts by weight of a tackifier;
20 to 150 parts by weight of process oil; and
0.01 to 5 parts by weight of a silicon tackifier or a silane coupler;
on the basis of 100 parts by weight of a styrene-ethylene-butylene-styrene block copolymer in said adhesive layer.

2. The prespace film of claim 1, wherein said tackifier is hydrogenated dicyclopentadiene, and said process oil is naphthenic process oil.

3. The prespace film of claim 1 or 2, wherein a thickness of said adhesive layer is 20 to 70 µm.

## Patentansprüche

1. Transferfolie, umfassend eine Polyolefinfolie mit einer Klebstoffschicht, umfassend:
50 bis 150 Gewichtsteile eines Klebrigmachers;
20 bis 150 Gewichtsteile eines Verfahrensöls; und
0,01 bis 5 Gewichtsteile eines Siliciumklebrigmachers oder eines Silankupplungsmittels,
bezogen auf 100 Gewichtsteile eines Styrol-Ethylen-Butylen-Styrol-Blockcopolymers in der Klebstoffschicht.

2. Transferfolie gemäß Anspruch 1, wobei der Klebrigmacher ein hydriertes Dicyclopentadien und das Verfahrensöl ein Naphthenverfahrensöl sind.

3. Transferfolie gemäß Anspruch 1 oder 2, wobei die Dicke der Klebstoffschicht 20 bis 70 µm beträgt.

## Revendications

1. Film de transfert comprenant un film en polyoléfine possédant une couche adhésive composée de :
50 à 150 parties en poids d'un agent d'encollage;
20 à 150 parties en poids d'une huile plastifiante; et
0,01 à 5 parties en poids d'un agent d'encollage siliconé ou d'un agent de couplage au silane;
sur la base de 100 parties en poids d'un copolymère en masse de styrène, éthylène, butylène et styrène dans ladite couche adhésive.

2. Film de transfert selon la revendication 1, dans lequel ledit agent d'encollage est du dicyclopentadiène hydrogéné, et ladite huile plastifiante est de l'huile plastifiante naphténique.

3. Film de transfert selon la revendication 1 ou la revendication 2, dans lequel l'épaisseur de ladite couche adhésive est comprise entre 20 et 70 µm.
